(19) Europäisches Patentamt
European Patent Office
Office européen des brevets

(11) Veröffentlichungsnummer: **0 632 107 A1**

# (12) EUROPÄISCHE PATENTANMELDUNG

(21) Anmeldenummer: **94109616.6**

(22) Anmeldetag: **22.06.94**

(51) Int. Cl.[6]: **C09B 62/513**, D06P 1/38

(30) Priorität: **26.06.93 DE 4321414**

(43) Veröffentlichungstag der Anmeldung:
**04.01.95 Patentblatt 95/01**

(84) Benannte Vertragsstaaten:
**BE CH DE FR GB IT LI**

(71) Anmelder: **HOECHST AKTIENGESELLSCHAFT**
**Brüningstrasse 50**
**D-65929 Frankfurt am Main (DE)**

(72) Erfinder: **Reiher, Uwe, Dr.**
**Sachsenring 8**
**D-65719 Hofheim am Taunus (DE)**
Erfinder: **Russ, Werner Hubert, Dr.**
**Wingertstrasse 8a**
**D-65439 Flörsheim/Main (DE)**

## (54) Wasserlösliche Disazoverbindungen, Verfahren zu ihrer Herstellung und ihre Verwendung als Farbstoffe.

(57) Es werden wasserlösliche, faserreaktive Disazoverbindungen der nachstehend angegebenen und definierten allgemeinen Formel (1) beschrieben, die als Farbstoffe zum Färben und Bedrucken von hydroxy- und/oder carbonamidgruppenhaltigem Material, insbesondere Fasermaterial, wie Wolle und synthetisches Polyamid und insbesondere Cellulosefasermaterialien, wie Baumwolle, dienen.

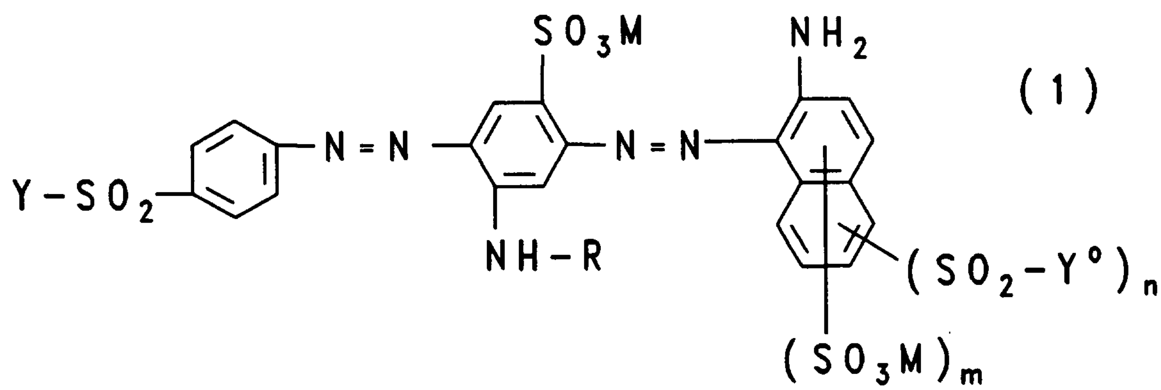

(1)

worin bedeuten: M ist Wasserstoff oder ein Alkalimetall, die Gruppen $Y\text{-}SO_2$-und $-SO_2\text{-}Y^0$ sind faserreaktive Gruppen der Vinylsulfonreihe, m ist die Zahl 1 oder 2, n ist die Zahl Null oder 1, R ist eine Gruppe der allgemeinen Formel (2) oder (3)

$-CO\text{-}R^A$ (2)

EP 0 632 107 A1

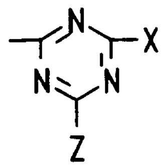

(3)

worin $R^A$ niederes Alkyl ist, das substituiert sein kann, oder Phenyl ist, das durch Sulfo, Carboxy, niederes Alkyl und/oder niederes Alkoxy substituiert sein kann, X Chlor, Fluor, Hydroxy, Alkoxy, Cycloalkoxy oder Alkoxy von 3 bis 8 C-Atomen ist, dessen Alkylrest durch -O-, -NH-, -CO-NH- oder -NH-CO-unterbrochen ist, oder ist Benzyloxy, Sulfomethoxy, $\beta$-Sulfoethoxy, Amino, Alkylamino, Cycloalkylamino oder Alkylamino von 3 bis 8 C-Atomen, dessen Alkylrest durch eine der obengenannten Heterogruppen unterbrochen ist, oder ist Benzylamino, Sulfomethylamino, $\beta$-Sulfoethylamino oder Cyanoamino, Z ist Chlor, Fluor oder eine Gruppe der allgemeinen Formel (4a), (4b), (4c) oder (4d)

$-NH-alk-SO_2-Y^1$ (4a)

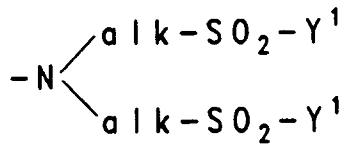

(4b)

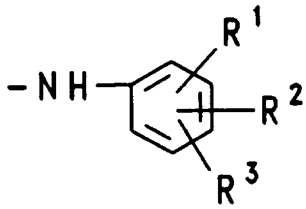

(4c)

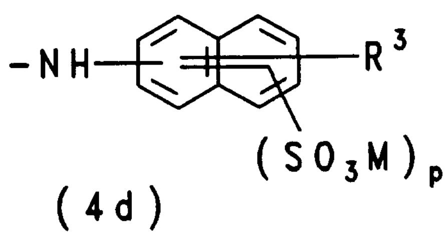

(4d)

in welchen alk Alkylen ist, das durch eine oder zwei der obengenannten Heterogruppen unterbrochen ist, die Gruppe $-SO_2-Y^1$ eine faserreaktive Gruppe der Vinylsulfonreihe ist, $R^1$ Wasserstoff, Carboxy, Sulfo oder eine faserreaktive Gruppe der Vinylsulfonreihe, $R^2$ Wasserstoff, niederes Alkyl, niederes Alkoxy, Chlor, Brom, Carboxy, Sulfo oder Nitro, $R^3$ Wasserstoff, niederes Alkyl, niederes Alkoxy, Chlor, Brom, Carboxy oder Sulfo und p die Zahl 1 oder 2 ist.

Die Erfindung liegt auf dem technischen Gebiet der faserreaktiven Farbstoffe.

Aus der Praxis des Färbens mit faserreaktiven Farbstoffen ergeben sich erhöhte Anforderungen an die Qualität der Färbungen und an die Wirtschaftlichkeit der Färbeprozesse. Infolge dessen bestand weiterhin ein Bedarf nach neuen faserreaktiven Farbstoffen, die verbesserte Eigenschaften besitzen. Insbesondere aus ökologischen Gründen sind in zunehmendem Maße schwermetallfreie Farbstoffe gefragt. Zwar sind aus der europäischen Patentanmeldungs-Veröffentlichung Nr. O 292 825 schwermetallfreie Disazofarbstoffe mit einer faserreaktiven Diazokomponente bekannt, deren Echtheitseigenschaften jedoch aufgrund der gestiegenen Anforderungen an das Echtheitsprofil von schwermetallfreien faserreaktiven Farbstoffen, speziell im Violettbereich, verbesserungsbedürftig sind.

Mit der vorliegenden Erfindung wurden nunmehr neue, verbesserte Disazoverbindungen gefunden, die der allgemeinen Formel (1) entsprechen:

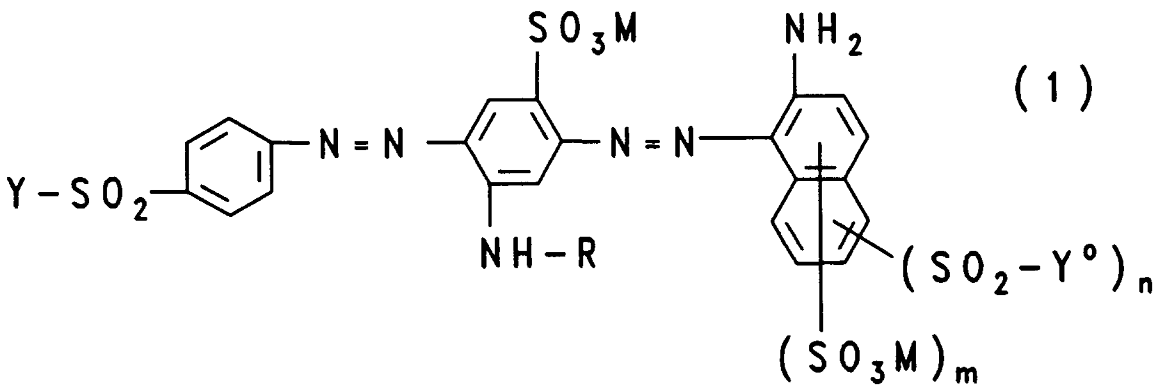

(1)

In dieser Formel bedeuten:

- M ist Wasserstoff oder ein Alkalimetall, wie Natrium, Kalium und Lithium;
- Y ist Vinyl oder ist Ethyl, das in β-Stellung durch einen unter Einwirkung von Alkali bei Bildung der Vinylgruppe eliminierbaren Substituenten substituiert ist;
- $Y^0$ ist Vinyl oder ist Ethyl, das in β-Stellung durch einen unter Einwirkung von Alkali bei Bildung der Vinylgruppe eliminierbaren Substituenten substituiert ist;
- m ist die Zahl 1 oder 2;
- n ist die Zahl Null oder 1 (wobei im Falle von n gleich Null diese Gruppe Wasserstoff ist);
- R ist eine Gruppe der allgemeinen Formel (2) oder (3)

$-CO-R^A$ (2)

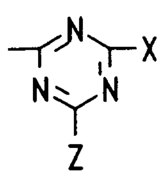

(3)

in welchen

- $R^A$ Alkyl von 1 bis 6 C-Atomen bedeutet, hiervon bevorzugt Methyl, Ethyl oder Propyl und insbesondere Methyl ist, oder Alkyl von 2 bis 6 C-Atomen ist, das substituiert ist, wie beispielsweise durch Chlor, Sulfo oder Carboxy, oder ein Phenylrest ist, der durch 1, 2 oder 3 Substituenten, bevorzugt 1 oder 2 Substituenten, aus der Gruppe Sulfo, Carboxy, Alkyl von 1 bis 4 C-Atomen, wie Methyl und Ethyl, und Alkoxy von 1 bis 4 C-Atomen, wie Methoxy und Ethoxy, substituiert sein kann,
- X Chlor, Fluor, Hydroxy, Alkoxy von 1 bis 10 C-Atomen, bevorzugt von 1 bis 4 C-Atomen, wie Propoxy, Ethoxy und Methoxy, oder Cycloalkyloxy von 5 bis 8 C-Atomen ist oder Alkoxy von 3 bis 8 C-Atomen bedeutet, wobei der Alkylrest durch eine oder zwei Heterogruppen unterbrochen ist, die aus den Gruppen -O-, -NH-, -CO-NH- und -NH-CO-, hiervon bevorzugt -O- und -NH-, ausgewählt sind, oder Benzyloxy, Sulfomethoxy, β-Sulfoethoxy, Amino, Alkylamino von 1 bis 10 C-Atomen, bevorzugt von 1 bis 4 C-Atomen, wie Propylamino, Ethylamino und Methylamino, oder

Cycloalkylamino von 5 bis 8 C-Atomen, wie Cyclohexylamino, ist oder Alkylamino von 3 bis 8 C-Atomen bedeutet, wobei der Alkylrest durch eine oder zwei Heterogruppen unterbrochen ist, die aus den Gruppen -O-, -NH- , -CO-NH- und -NH-CO-, hiervon bevorzugt -O- und -NH- , ausgewählt sind, oder Benzylamino, Sulfomethylamino, β-Sulfoethylamino oder Cyanoamino ist und bevorzugt Fluor, Chlor oder Cyanoamino bedeutet und

Z Chlor, Fluor oder eine Gruppe der allgemeinen Formel (4a), (4b), (4c) oder (4d)

$-NH-alk-SO_2-Y^1$ (4a)

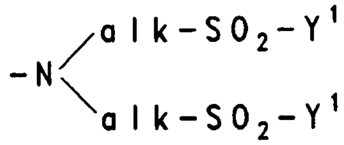

(4b)

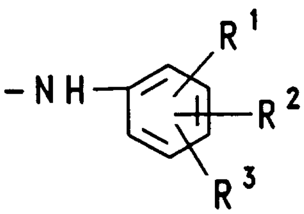

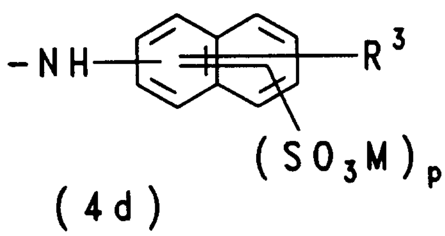

(4c) (4d)

ist, in welchen

alk Alkylen von 1 bis 8 C-Atomen, bevorzugt von 2 bis 4 C-Atomen, ist, wobei das Alkylen bevorzugt geradkettig ist, oder Alkylen von 3 bis 8 C-Atomen ist, das durch eine oder zwei Heterogruppen unterbrochen ist, die aus den Gruppen -O-, -NH-, -CO-NH- und -NH-CO-, hiervon bevorzugt -O- und -NH-, ausgewählt sind,

$Y^1$ Vinyl ist oder Ethyl bedeutet, das in β-Stellung durch einen Substituenten substituiert ist, der durch Alkali unter Bildung der Vinylgruppe eliminierbar ist,

$R^1$ Wasserstoff, Carboxy, Sulfo oder eine Gruppe der allgemeinen Formel $-SO_2-Y^1$ mit $Y^1$ der obengenannten Bedeutung ist,

$R^2$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Carboxy, Sulfo oder Nitro und bevorzugt Wasserstoff, Alkyl von 1 bis 4 C-Atomen, Alkoxy von 1 bis 4 C-Atomen oder Sulfo ist,

$R^3$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Carboxy oder Sulfo und bevorzugt Wasserstoff, Alkoxy von 1 bis 4 C-Atomen oder Sulfo ist,

M eine der obengenannten Bedeutungen besitzt und

p für die Zahl 1 oder 2 steht,

wobei im Falle von n gleich 1 der Rest Z in Formel (3) bevorzugt keinen Rest mit einer Gruppe der Formel $-SO_2-Y^1$ bedeutet.

In den obengenannten allgemeinen Formeln können die einzelnen Formelglieder im Rahmen ihrer Bedeutung zueinander gleiche oder voneinander verschiedene Bedeutungen haben.

Alkalisch eliminierbare Substituenten, die in β-Stellung der Ethylgruppe von Y, $Y^0$ und $Y^1$ stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt sind Y, $Y^0$ und $Y^1$ β-Chlorethyl, β-Sulfatoethyl oder Vinyl.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel $-SO_3M$, Carboxygruppen Gruppen entsprechend der allgemeinen Formel -COOM, Thiosulfatogruppen Gruppen entsprechend der allgemeinen Formel $-S-SO_3M$, Phosphatogruppen Gruppen entsprechend der allgemeinen Formel $-OPO_3M_2$ und Sulfatogruppen Gruppen entsprechend der allgemeinen Formel $-OSO_3M$ , in welchen M die obengenannte Bedeutung besitzt.

Die vorliegende Erfindung betrifft weiterhin Gemische von Disazoverbindungen der allgemeinen Formel (1), insbesondere Gemische, die Disazoverbindungen entsprechend den nachstehend angegebenen allgemeinen Formeln (1A) und (1B) enthalten, in welchen die einzelnen Formelglieder die obengenannten Bedeutungen haben. Hiervon sind diejenigen Gemische von besonderem Interesse, die zwei bis vier Disazoverbindungen der allgemeinen Formeln (1A) und (1B) enthalten, wobei diese Disazoverbindungen bevorzugt aus einer oder zwei Disazoverbindungen aus der Gruppe der Disazoverbindungen der allgemeinen Formel (1A) und aus einer oder zwei Disazoverbindungen aus der Gruppe der Disazoverbindungen der allgemeinen Formel (1B) ausgewählt sind.

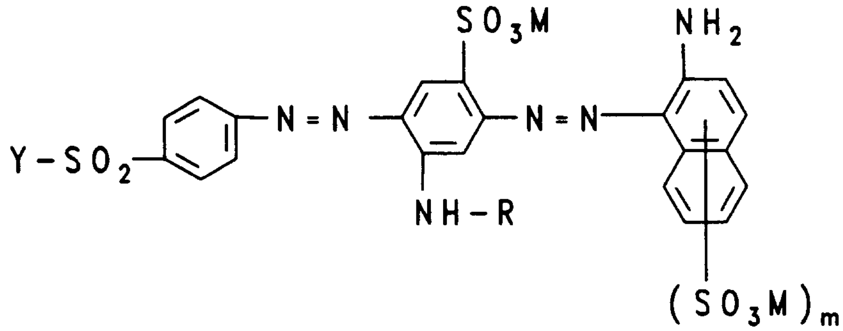

(1A)

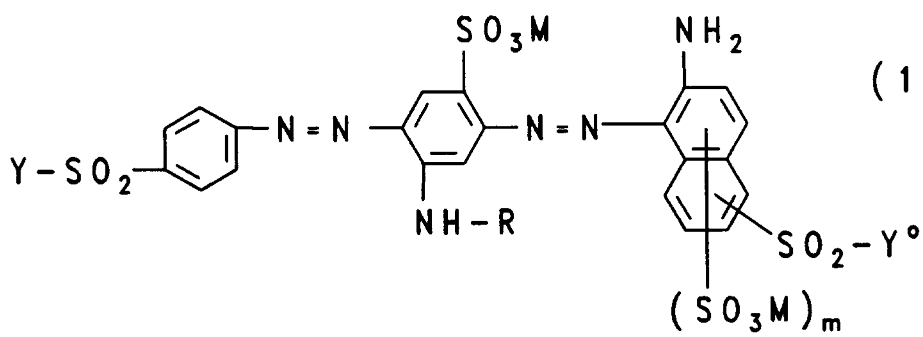

(1B)

In der Regel liegen die Disazoverbindungen der allgemeinen Formel (1A) und die Disazoverbindungen der allgemeinen Formel (1B) in einem Mischungsverhältnis von 5:95 bis 95:5 Gew.-%, bevorzugt im Mischungsverhältnis von 30:70 bis 70:30 Gew.-%, vor. Diese Gemische können in fester Form, beispielsweise als Pulver, vorliegen oder in Form einer wäßrigen, bevorzugt konzentrierten, wäßrigen, Lösung als "Flüssigpräparation", die gegebenenfalls eine Puffersubstanz enthält, die einen pH-Wert zwischen 3 und 7 einzuhalten vermag, wie sie beispielsweise aus den U.S.-Patentschriften Nrs. 4 072 463 und 4 448 583 bekannt sind.

Die vorliegende Erfindung betrifft weiterhin ein Verfahren zur Herstellung der erfindungsgemäßen Disazoverbindungen der allgemeinen Formel (1), das dadurch gekennzeichnet ist, daß man eine Verbindung der allgemeinen Formel (5)

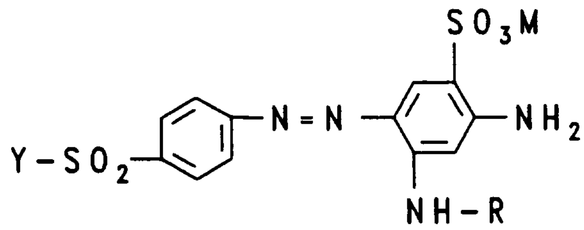

(5)

in welcher Y, R und M die obengenannten Bedeutungen haben, diazotiert und mit einer Verbindung der allgemeinen Formel (6)

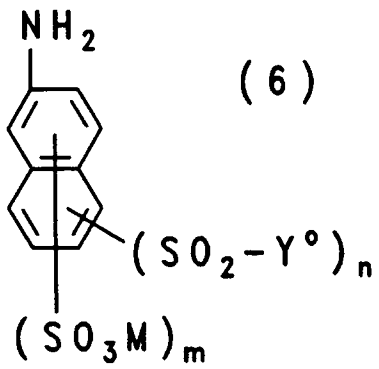

(6)

in welcher $Y^0$, M, m und n die obengenannten Bedeutungen haben, kuppelt. Die Diazotierungs- und Kupplungsreaktionen erfolgen analog bekannten Verfahrensweisen, so die Diazotierung in der Regel bei einer Temperatur zwischen -5 °C und + 15 °C und bei einem pH-Wert unterhalb von 2 mittels einer starken Säure und Alkalinitrit in bevorzugt wäßrigem Medium und die Kupplungsreaktion in der Regel bei einer Temperatur zwischen 0 und 60 °C und bei einem pH-Wert zwischen 1,5 und 4 in bevorzugt wäßrigem Medium.

Ausgangsverbindungen der allgemeinen Formel (6) sind beispielsweise 2-Amino-naphthalin-5,7-disulfonsäure, 2-Amino-naphthalin-6,8-disulfonsäure, 2-Amino-naphthalin-3,6-disulfonsäure, 6-(β-Sulfatoethylsulfonyl)-2-amino-naphthalin, 8-Sulfo-6-(β-sulfatoethylsulfonyl)-2-amino-naphthalin, 8-(β-Sulfatoethylsulfonyl)-2-amino-naphthalin, 6-Sulfo-8-(β-sulfatoethylsulfonyl)-2-amino-naphthalin, 5-Sulfo-2-amino-naphthalin, 6-Sulfo-2-amino-naphthalin, 7-Sulfo-2-amino-naphthalin und 8-Sulfo-2-amino-naphthalin.

Die Ausgangs-Monoazoverbindungen der allgemeinen Formel (5) lassen sich in bekannter Weise herstellen, indem man unter den üblichen Diazotierungs- und Kupplungsbedingungen eine Verbindung der allgemeinen Formel (7)

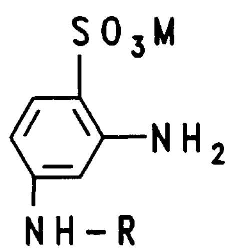

(7)

in welcher M und R die obengenannten Bedeutungen haben, mit dem Diazoniumsalz der Anilinverbindung der allgemeinen Formel (8)

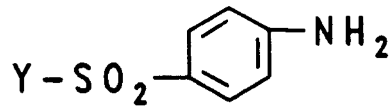

(8)

in welcher Y die obengenannte Bedeutung besitzt, kuppelt.

Die für die Synthese der erfindungsgemäßen Disazoverbindungen der allgemeinen Formel (1) einsetzbaren Ausgangsverbindungen, wie beispielsweise die Verbindungen der allgemeinen Formeln (7), (8), H-X und H-Z, sind bekannt und teilweise zahlreich in der Literatur beschrieben.

Gemische von Disazoverbindungen der allgemeinen Formel (1A) und der allgemeinen Formel (1B) lassen sich zum einen in üblicher Weise durch mechanische Mischung der einzelnen Farbstoffe oder zum anderen auf chemischem Wege hergestellt werden, indem man die Diazoniumsalze von einer oder mehreren, wie einer oder zwei, Monoazoverbindungen der allgemeinen Formel (5) in einem Reaktionsansatz mit einer oder mehreren, wie einer oder zwei, Kupplungskomponenten der allgemeinen Formel (6), in welcher n für die Zahl Null steht, und mit einer oder mehreren, wie einer oder zwei, Kupplungskomponenten der allgemeinen Formel (6), in welcher n die Zahl 1 bedeutet, in dem jeweilig gewünschten molaren Verhältnis kuppelt.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1), einzeln oder als Gemisch, zum Färben (einschließlich Bedrukken) von hydroxy- und/oder carbonamidgruppenhaltigen Materialien bzw. Verfahren zu deren färberischen Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Disazoverbindung(en) der allgemeinen Formel (1) in gelöster Form auf das Substrat aufbringt oder einbringt und sie auf diesem oder in diesem durch Hitzeeinwirkung oder durch Einwirkung eines alkalisch wirkenden Mittels oder durch beide Maßnahmen auf oder in dem Material fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial Färbungen und Drucke mit hoher Farbausbeute und gutem Farbaufbau erhalten. Die Färbungen und Drucke besitzen gute Echtheitseigenschaften, wie insbesondere gute Licht- und Naßechtheitseigenschaften, wovon die guten Lichtechtheiten hervorgehoben werden können.

Bevorzugt dienen die erfindungsgemäßen Azofarbstoffe zum Färben von Cellulosefasermaterialien. Von den hierauf erzielbaren guten Echtheitseigenschaften sind insbesondere die Waschechtheiten bei 60 bis 95 °C, auch in Gegenwart von Perboraten, die sauren und alkalischen Walk-, Überfärbe-und Schweißechtheiten, die Lichtechtheit der Färbung in trockenem als auch im mit Trinkwasser oder einer sauren oder alkalischen Schweißlösung feuchtem Zustand, die Alkali-, Säure-, Wasser- und Seewasserechtheiten und die gute Säurelagerbeständigkeit ("acid fading") beim Lagern von feuchtem, säurehaltigem gefärbtem Material (s. deutsche Auslegeschrift Nr. 2 322 236, Spalte 4, Zeilen 35 bis 42) hervorzuheben. Weiterhin können die guten Reib-, Plissier- und Bügelechtheiten genannt werden.

Liegen die erfindungsgemäßen Disazoverbindungen als Gemische entsprechend den allgemeinen Formeln (1A) und (1B) vor, so ergeben sich gewisse Vorteile. Beispielsweise zeigen die erfindungsgemäßen Gemische in der Regel gegenüber den Einzelfarbstoffen der allgemeinen Formel (1A) in überraschender Weise einen höheren Fixierwert, was insbesondere aus ökologischer Sicht vorteilhaft ist. Gegenüber den Einzelfarbstoffen der allgemeinen Formel (1B) besitzen die Gemische im allgemeinen eine verbesserte Wasserlöslichkeit.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze hergestellt und isoliert und in Form dieser Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.
Die im sichtbaren Bereich angegebenen Absorptionsmaxima ($\lambda_{max}$-Werte) wurden aus wäßriger Lösung der Alkalimetallsalze ermittelt. In den Tabellenbeispielen sind die $\lambda_{max}$-Werte bei der Farbtonangabe in Klammern gesetzt; die Wellenlängenangabe bezieht sich auf nm.

Beispiel 1

Man diazotiert 28,1 Teile 4-(β-Sulfatoethylsulfonyl)-anilin in üblicher Weise in wäßrigem Medium (40 Teile Wasser) unter Verwendung von 26,5 Teilen konzentrierter wäßriger Salzsäure und 17,5 Teilen einer 40 %igen wäßrigen Natriumnitritlösung und zerstört anschließend überschüssige salpetrige Säure mit wenig Amidosulfonsäure. Zu dieser Diazoniumsalzlösung gibt man 23 Teile 2-Sulfo-5-acetylamino-anilin hinzu und stellt den Ansatz mit Natriumcarbonat auf einen pH-Wert von 3. Man rührt den Ansatz zur Vervollständigung der Kupplungsreaktion zunächst bei 20 °C während 30 Minuten und anschließend bei 55 °C während etwa 3 Stunden, kühlt ihn sodann mittels Eis auf etwa 0 °C ab, versetzt mit 25 Teilen einer konzentrierten wäßrigen Salzsäure und diazotiert anschließend mit 16 Teilen einer 40 %igen wäßrigen Natriumnitritlösung. Überschüssige salpetrige Säure wird mit wenig Amidosulfonsäure zerstört. Man gibt 30,3 Teile 2-Aminonaphthalin-5,7-disulfonsäure hinzu, stellt den Ansatz mit Natriumcarbonat auf einen pH-Wert zwischen 5 und 5,5 und rührt zur Vervollständigung der Kupplungsreaktion noch etwa 16 Stunden nach.

Die erfindungsgemäße Disazoverbindung, die, in Form der freien Säure geschrieben, die Formel

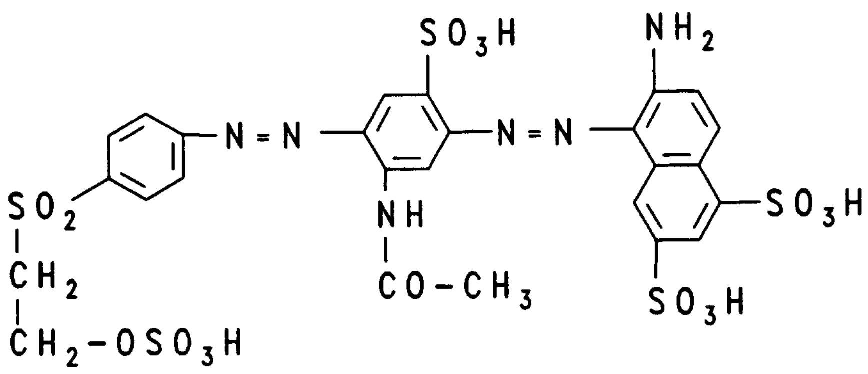

($\lambda_{max}$ = 534 nm)

besitzt, wird in üblicher Weise, beispielsweise durch Eindampfen der Syntheselösung, isoliert. Sie zeigt sehr gute faserreaktive Farbstoffeigenschaften und färbt nach den in der Technik für faserreaktive Farbstoffe üblichen Anwendungs- und Fixierverfahren auf den in der Beschreibung genannten Materialien, wie insbesondere Baumwolle, farbstarke violette Färbungen und Drucke mit guten Echtheitseigenschaften, von denen insbesondere die gute Lichtechtheit hervorgehoben werden kann.

Beispiel 2

Zur Herstellung einer erfindungsgemäßen Disazoverbindung verfährt man gemäß der Verfahrensweise des Beispieles 1, setzt jedoch bei der zweiten Kupplungsreaktion anstelle der dort angegebenen zweiten Kupplungskomponente als Kupplungskomponente 33,1 Teile 6-($\beta$-Sulfatoethylsulfonyl)-2-amino-naphthalin ein und führt diese zweite Kupplungsreaktion bei einem pH-Wert zwischen 4,5 und 5 durch.

Die erfindungsgemäße Disazoverbindung, die, in Form der freien Säure geschrieben, die Formel

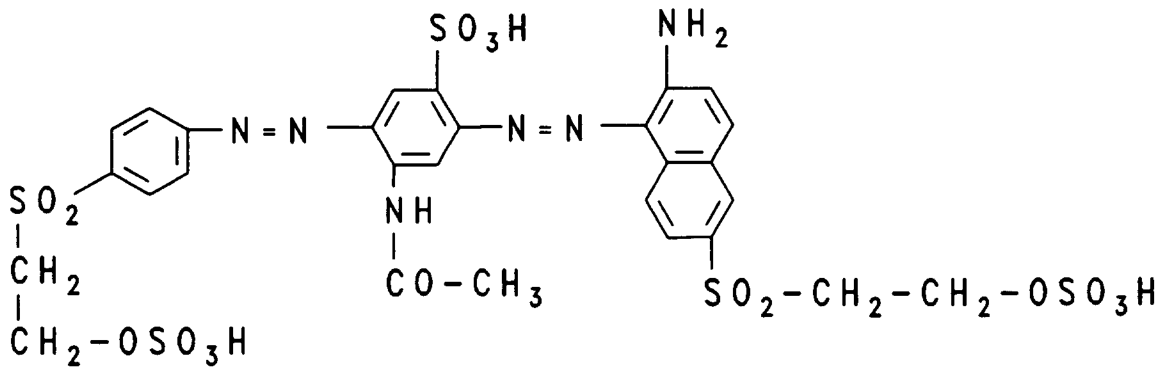

($\lambda_{max}$ = 531 nm)

besitzt, wird in üblicher Weise, beispielsweise durch Aussalzen mit Natriumchlorid, isoliert. Sie zeigt gute Farbstoffeigenschaften und liefert auf den in der Beschreibung genannten Fasermaterialien, wie beispielsweise Baumwolle, nach den in der Technik für faserreaktive Farbstoffe üblichen Färbe- und Druckverfahren farbstarke violette Färbungen und Drucke mit guten Echtheitseigenschaften, von denen insbesondere die gute Lichtechtheit hervorgehoben werden kann.

Beispiel 3

Zur Herstellung einer erfindungsgemäßen Disazoverbindung verfährt man gemäß der Verfahrensweise des Beispieles 1, setzt jedoch bei der zweiten Kupplungsreaktion anstelle der dort angegebenen zweiten Kupplungskomponente als Kupplungskomponente 41,1 Teile 8-Sulfo-6-($\beta$-sulfatoethylsulfonyl)-2-amino-naphthalin ein und führt diese zweite Kupplungsreaktion bei einem pH-Wert zwischen 4,5 und 5 durch.

Die erfindungsgemäße Disazoverbindung, die, in Form der freien Säure geschrieben, die Formel

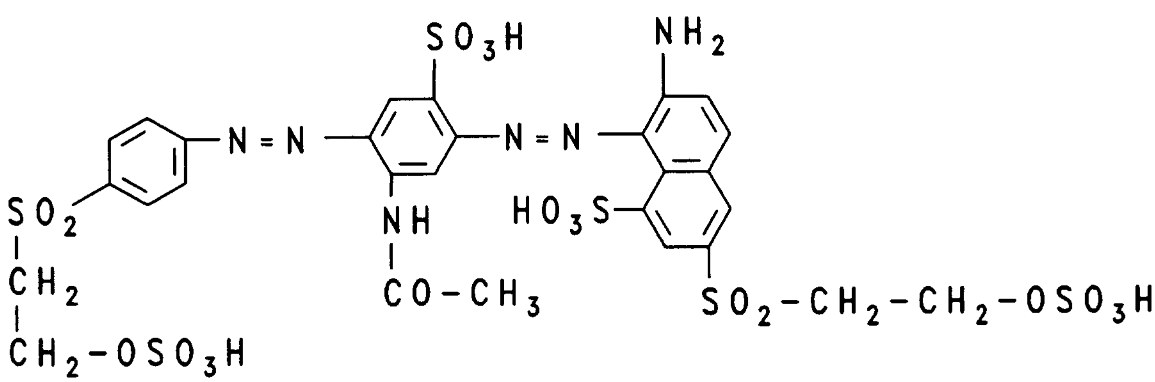

($\lambda_{max}$ = 513 nm)

besitzt, wird in üblicher Weise, beispielsweise durch Aussalzen mit Kaliumchlorid, isoliert. Sie zeigt gute Farbstoffeigenschaften und liefert auf den in der Beschreibung genannten Fasermaterialien, wie beispielsweise Baumwolle, nach den in der Technik für faserreaktive Farbstoffe üblichen Färbe- und Druckverfahren farbstarke rotbraune Färbungen und Drucke mit guten Echtheitseigenschaften, von denen insbesondere die gute Lichtechtheit hervorgehoben werden kann.

Beispiel 4

a) 4,2 Teile Cyanamid werden zu einer Suspension aus 18,4 Teilen Cyanurchlorid in 200 Teilen Wasser und 200 Teilen Eis gegeben. Mit konzentrierter Natronlauge wird ein pH-Wert von 9 eingestellt und der Ansatz etwa 2 Stunden bei 0 bis 3°C und unter Einhaltung eines pH-Wertes von 9 weitergerührt. Anschließend gibt man verdünnte wäßrige Salzsäure hinzu, bis ein pH-Wert von 2 erreicht ist, versetzt den Ansatz mit 17,3 Teilen Anilin-3-sulfonsäure, rührt etwa 2 Stunden nach, gibt sodann 18,8 Teile 1 ,3-Diaminobenzol-4-sulfonsäure hinzu und führt die Umsetzung bei 45°C zu Ende. Anschließend kühlt man den Ansatz auf Raumtemperatur ab.

b) Man stellt gemäß den Angaben des Beispieles 1 eine Diazoniumsalzlösung von 28,1 Teilen 4-(β-Sulfatoethylsulfonyl)-anilin her, gibt sodann 47,8 Teile der unter a) hergestellten, als Kupplungskomponente dienenden Verbindung 2-Sulfo-5[2'-(3''-sulfo-phenyl)-amino-4'-cyanoamino-1',3',5'-triazin-6'-yl]-amino-anilin hinzu und führt die Kupplungsreaktion in an und für sich bekannter Weise durch. Die Reaktionslösung wird anschließend mit Eis auf etwa 0°C abgekühlt und mit 25 Teilen einer wäßrigen konzentrierten Salzsäure versetzt. Die erhaltene Amino-Azoverbindung wird durch Zugabe von 17,5 Teilen einer 40%igen wäßrigen Natriumnitritlösung diazotiert. Nach Zerstören von überschüssiger salpetriger Säure mittels wenig Amidosulfonsäure gibt man 30,3 Teile 2-Amino-naphthalin-5,7-disulfonsäure hinzu, stellt mit Natriumcarbonat einen pH-Wert von 5 ein und rührt noch etwa 16 Stunden nach.

Die erhaltene erfindungsgemäße Disazoverbindung wird in üblicher Weise, beispielsweise durch Eindampfen der Syntheselösung, isoliert. Sie besitzt, in Form der freien Säure geschrieben, die Formel

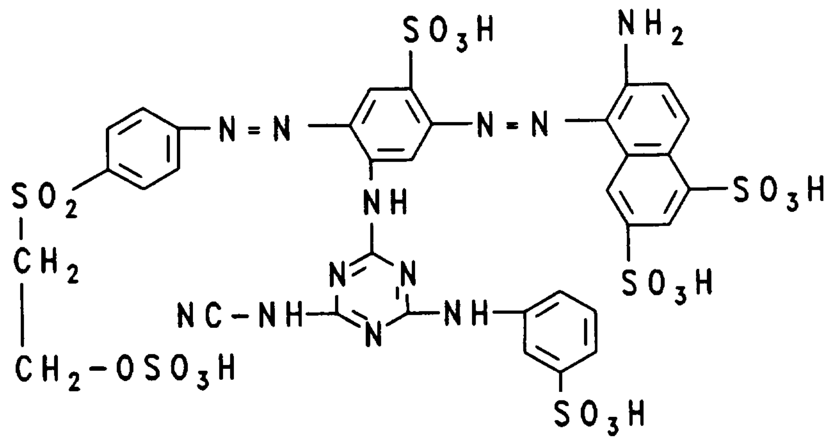

($\lambda_{max}$ = 540 nm).

Die erfindungsgemäße Disazoverbindung zeigt sehr gute faserreaktive Farbstoffeigenschaften und ergibt nach den für faserreaktive Farbstoffe üblichen Anwendungsverfahren beispielsweise auf Cellulosefasermaterialien, wie Baumwolle, farbstarke blaustichig rote Färbungen und Drucke mit guten Echtheitseigenschaften, von denen insbesondere die gute Lichtechtheit hervorgehoben werden kann.

Beispiele 5 bis 55

In den nachfolgenden Tabellenbeispielen sind weitere erfindungsgemäße Disazoverbindungen entsprechend der allgemeinen Formel (A)

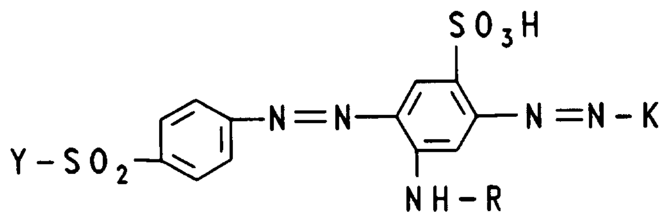

(A)

mit Hilfe von deren Komponenten beschrieben. Sie lassen sich in erfindungsgemäßer Verfahrensweise, beispielsweise analog einem der obigen Beispiele, unter Einsatz der aus dem jeweiligen Tabellenbeispiel in Verbindung mit der allgemeinen Formel (A) ersichtlichen Komponenten (wie der Diazokomponente der Formel Y-$SO_2$-phenylen-$NH_2$, der diazotierbaren ersten Kupplungskomponente 2-Sulfo-5-acylamino-anilin oder 1,3-Diaminobenzol-6-sulfonsäure, Cyanurchlorid oder Cyanurfluorid, einem Amin entsprechend der allgemeinen Formel H-X , einem Amin entsprechend der allgemeinen Formel H-Y und der zweiten Kupplungskomponente entsprechend der allgemeinen Formel H-K ) herstellen. Sie besitzen sehr gute faserreaktive Farbstoffeigenschaften und färben die in der Beschreibung genannten Materialien, wie insbesondere Cellulosefasermaterialien, beispielsweise Baumwolle, in dem in dem jeweiligen Tabellenbeispiel (hier für Baumwolle) angegebenen Farbton in hoher Farbstärke und mit guten Echtheiten.

| Bsp. | Rest Y | Rest R | Rest K | Farbton |
|---|---|---|---|---|
| 5 | ß-Sulfatoethyl | Formel (3):<br>X = Cyanoamino,<br>Y = 2-Sulfo-phenylamino | 5,7-Disulfo-2-amino-naphth-1-yl | blaustichig rot (538) |
| 6 | ß-Sulfatoethyl | Formel (3):<br>X = Cyanoamino,<br>Y = 4-Sulfo-phenylamino | dito | blaustichig rot (541) |
| 7 | ß-Sulfatoethyl | Formel (3):<br>X = Cyanoamino,<br>Y = 3-(ß-Sulfatoethylsulfonyl)-phenylamino | dito | blaustichig rot (537) |
| 8 | ß-Sulfatoethyl | Formel (3):<br>X = Cyanoamino,<br>Y = 2-Methoxy-5-(ß-sulfatoethylsulfonyl)-phenylamino | dito | blaustichig rot (538) |

| Bsp. | Rest Y | Rest R | Rest K | Farbton |
|---|---|---|---|---|
| 9 | ß-Sulfatoethyl | Formel (3):<br>X = Cyanoamino,<br>Y = 4-(ß-Sulfatoethylsulfonyl)-phenylamino | dito | blaustichig rot (540) |
| 10 | ß-Sulfatoethyl | Formel (3):<br>X = Fluor,<br>Y = 3-Sulfo-phenylamino | dito | blaustichig rot (539) |
| 11 | ß-Sulfatoethyl | Formel (3):<br>X = Fluor,<br>Y = 4-(ß-Sulfatoethylsulfonyl)-phenylamino | dito | blaustichig rot (538) |
| 12 | ß-Sulfatoethyl | Formel (3):<br>X = Fluor,<br>Y = 2-Methoxy-5-(ß-sulfatoethylsulfonyl)-phenylamino | dito | blaustichig rot (538) |
| 13 | ß-Sulfatoethyl | Formel (3):<br>X = Fluor,<br>Y = γ-(ß'-Sulfatoethylsulfonyl)-propylamino | dito | blaustichig rot (536) |

| Bsp. | Rest Y | Rest R | Rest K | Farbton |
|---|---|---|---|---|
| 14 | ß-Sulfatoethyl | Formel (3):<br>X = Fluor,<br>Y = γ-(ß'-Chlorethylsulfonyl)-propylamino | dito | blaustichig rot (539) |
| 15 | ß-Sulfatoethyl | Formel (3):<br>X = Fluor,<br>Y = γ-(Vinylsulfonyl)-propylamino | dito | blaustichig rot (538) |
| 16 | ß-Sulfatoethyl | Formel (3):<br>X = Fluor,<br>Y = Bis-[ß-(ß'-chlorethylsulfonyl)-ethyl]-amino | dito | blaustichig rot (542) |
| 17 | ß-Sulfatoethyl | Formel (3):<br>X = Fluor,<br>Y = Bis-(ß-vinylsulfonyl-ethyl)-amino | dito | blaustichig rot (540) |
| 18 | ß-Chlorethyl | Formel (3):<br>X = Fluor,<br>Y = Bis-[γ-(ß'-chlorethylsulfonyl)-propyl]-amino | dito | blaustichig rot (543) |

| Bsp. | Rest Y | Rest R | Rest K | Farbton |
|---|---|---|---|---|
| 19 | ß-Sulfatoethyl | Formel (3):<br>X = Chlor,<br>Y = 4-(ß-Sulfatoethylsulfonyl)-phenylamino | dito | blaustichig rot (546) |
| 20 | ß-Sulfatoethyl | Formel (3):<br>X = Chlor,<br>Y = 3-(ß-Sulfatoethylsulfonyl)-phenylamino | dito | blaustichig rot (544) |
| 21 | ß-Sulfatoethyl | Formel (3):<br>X = Chlor,<br>Y = 2-Methoxy-5-(ß-sulfatoethylsulfonyl)-phenylamino | dito | blaustichig rot (547) |
| 22 | ß-Sulfatoethyl | Formel (3):<br>X = Chlor,<br>Y = γ-(ß'-Sulfatoethylsulfonyl)-propylamino | dito | blaustichig rot (542) |
| 23 | ß-Sulfatoethyl | Formel (3):<br>X = Chlor,<br>Y = γ-(ß'-Chlorethylsulfonyl)-propylamino | dito | blaustichig rot (543) |

| Bsp. | Rest Y | Rest R | Rest K | Farbton |
|---|---|---|---|---|
| 24 | ß-Sulfatoethyl | Formel (3):<br>X = Chlor,<br>Y = γ-(Vinylsulfonyl)-propylamino | dito | blaustichig rot (540) |
| 25 | ß-Sulfatoethyl | Formel (3):<br>X = Chlor,<br>Y = Bis-[ß-(ß'-chlorethylsulfonyl)-ethyl]-amino | dito | blaustichig rot (544) |
| 26 | ß-Sulfatoethyl-sulfonyl | Formel (3):<br>X = Chlor,<br>Y = Bis-(γ-vinylsulfonyl-propyl)-amino | dito | blaustichig rot (542) |
| 27 | ß-Chlorethyl | Formel (3):<br>X = Chlor,<br>Y = Bis-[γ-(ß'-chlorethylsulfonyl)-propyl]-amino | dito | blaustichig rot (545) |
| 28 | Vinyl | Formel (3):<br>X = Chlor,<br>Y = Bis-(γ-vinylsulfonyl-propyl)-amino | dito | blaustichig rot (543) |

| Bsp. | Rest Y | Rest R | Rest K | Farbton |
|---|---|---|---|---|
| 29 | ß-Sulfatoethyl | Formel (3):<br>X = Chlor,<br>Y = 2-Sulfo-phenylamino | dito | blaustichig rot (540) |
| 30 | ß-Sulfatoethyl | Formel (3):<br>X = Chlor,<br>Y = 3-Sulfo-phenylamino | dito | blaustichig rot (543) |
| 31 | ß-Sulfatoethyl | Formel (3):<br>X = Chlor,<br>Y = 4-Sulfo-phenylamino | dito | blaustichig rot (544) |
| 32 | ß-Sulfatoethyl | Acetyl | 8-(ß-Sulfatoethyl-sulfonyl)-2-amino-naphth-1-yl | rotstichig braun (509) |
| 33 | ß-Sulfatoethyl | Acetyl | 6-Sulfo-8-(ß-sulfatoethyl-sulfonyl)-2-amino-naphth-1-yl | braun (514) |
| 34 | ß-Sulfatoethyl | Acetyl | 3,6-Disulfo-2-amino-naphth-1-yl | rotstichig blau (531) |

| Bsp. | Rest Y | Rest R | Rest K | Farbton |
|---|---|---|---|---|
| 35 | ß-Sulfatoethyl | Acetyl | 6,8-Disulfo-2-amino-naphth-1-yl | rotstichig blau (533) |
| 36 | ß-Sulfatoethyl | Acetyl | 5-Sulfo-2-amino-naphth-1-yl | rotstichig blau (543) |
| 37 | ß-Sulfatoethyl | Acetyl | 6-Sulfo-2-amino-naphth-1-yl | rotstichig blau (544) |
| 38 | ß-Sulfatoethyl | Acetyl | 7-Sulfo-2-amino-naphth-1-yl | rotstichig blau (545) |
| 39 | ß-Sulfatoethyl | Acetyl | 8-Sulfo-2-amino-naphth-1-yl | rotstichig blau (547) |
| 40 | Vinyl | Acetyl | 5,7-Disulfo-2-amino-naphth-1-yl | rotstichig blau (531) |
| 41 | Vinyl | Acetyl | 6,8-Disulfo-2-amino-naphth-1-yl | rotstichig blau (536) |

| Bsp. | Rest Y | Rest R | Rest K | Farbton |
|---|---|---|---|---|
| 42 | Vinyl | Acetyl | 8-Sulfo-6-(ß-sulfatoethyl-sulfonyl)-2-amino-naphth-1-yl | rotbraun (515) |
| 43 | Vinyl | Acetyl | 6-Sulfo-8-(ß-sulfatoethyl-sulfonyl)-2-amino-naphth-1-yl | braun (516) |
| 44 | Vinyl | Benzoyl | 5,7-Disulfo-2-amino-naphth-1-yl | rotstichig blau (532) |
| 45 | Vinyl | Benzoyl | 6,8-Disulfo-2-amino-naphth-1-yl | rotstichig blau (537) |
| 46 | ß-Sulfatoethyl | Benzoyl | 5,7-Disulfo-2-amino-naphth-1-yl | rotstichig blau (531) |
| 47 | ß-Sulfatoethyl | Benzoyl | 6,8-Disulfo-2-amino-naphth-1-yl | rotstichig blau (535) |
| 48 | ß-Sulfatoethyl | Benzoyl | 6-(ß-Sulfatoethylsulfonyl)-2-amino-naphth-1-yl | violett (532) |

| Bsp. | Rest Y | Rest R | Rest K | Farbton |
|---|---|---|---|---|
| 49 | ß-Sulfatoethyl | Benzoyl | 8-Sulfo-6-(ß-sulfatoethyl-sulfonyl)-2-amino-naphth-1-yl | rotbraun (514) |
| 50 | ß-Sulfatoethyl | Benzoyl | 6-Sulfo-8-(ß-sulfatoethyl-sulfonyl)-2-amino-naphth-1-yl | braun (516) |
| 51 | Vinyl | Formel (3):<br>X = Cyanoamino,<br>Y = 3-Sulfo-phenylamino | 5,7-Disulfo-2-amino-naphth-1-yl | blaustichig rot (539) |
| 52 | Vinyl | Formel (3):<br>X = Fluor,<br>Y = 4-(ß-Sulfatoethylsulfonyl)-phenylamino | dito | blaustichig rot (540) |
| 53 | Vinyl | Formel (3):<br>X = Fluor,<br>Y = γ-(ß'-Sulfatoethylsulfonyl)-propyl-amino | dito | blaustichig rot (537) |
| 54 | Vinyl | Formel (3):<br>X = Chlor,<br>Y = 4-(ß-Sulfatoethylsulfonyl)-phenylamino | dito | blaustichig rot (545) |

| Bsp. | Rest Y | Rest R | Rest K | Farbton |
|---|---|---|---|---|
| 55 | Vinyl | Formel (3):<br>X = Chlor,<br>Y = Bis-[ß-(ß'-chlorethylsulfonyl)-ethyl]-amino | dito | blaustichig rot (546) |

Beispiel 56 A

Man stellt gemäß den Angaben des Beispieles 1 die Monoazoverbindung durch Kupplungsreaktion des Diazoniumsalzes von 28,1 Teilen 4-($\beta$-Sulfatoethylsulfonyl)-anilin mit 23 Teilen 2-Sulfo-5-acetylamino-anilin

her, diazotiert diese Amino-Azoverbindung gemäß den Angaben des Beispieles 1 und fügt sodann 15 Teile 2-Amino-naphthalin-5,7-disulfonsäure und 16,5 Teile 6-(β-Sulfatoethylsulfonyl)-2-amino-naphthalin hinzu, stellt mittels Natriumcarbonat einen pH-Wert von 4,5 bis 5 ein und führt die Kupplungsreaktion unter weiterem Rühren bei etwa 20 °C zu Ende.

Man isoliert das erfindungsgemäße Gemisch der erfindungsgemäßen Disazoverbindungen der Formeln (in Form der freien Säure geschrieben)

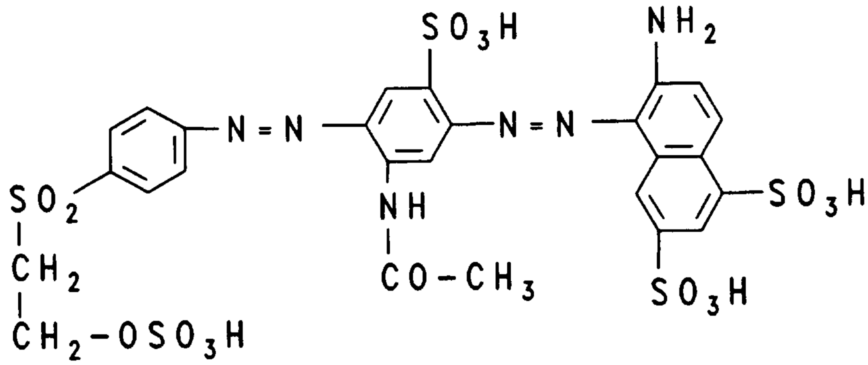

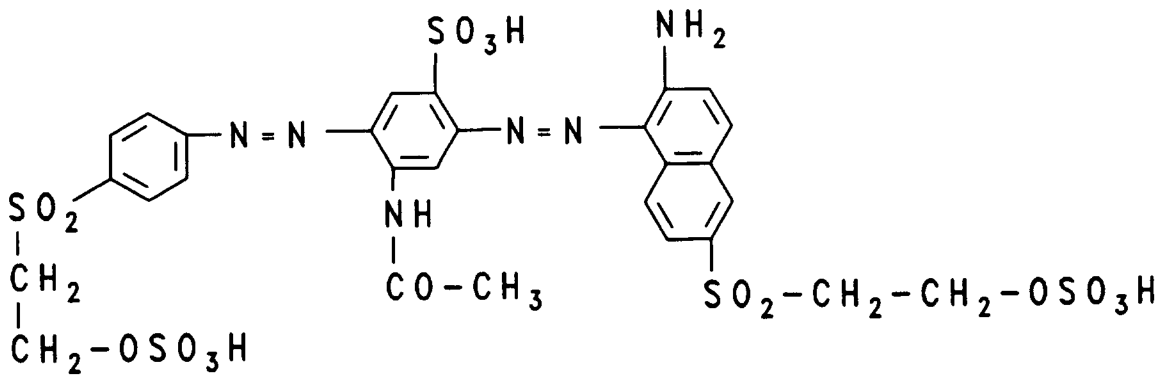

als Alkalimetallsalze (Natriumsalze) durch Ausfällen aus der Syntheselösung mittels Natriumchlorid. Mit dem erfindungsgemaßen Gemisch erhält man nach den für faserreaktive Farbstoffe üblichen Applikations- und Fixierverfahren auf den in der Beschreibung genannten Materialien, wie insbesondere auf Baumwolle, farbstarke violette Färbungen und Drucke mit guten Echtheitseigenschaften, von denen insbesondere die gute Lichtechtheit hervorgehoben werden kann.

Beispiel 56 B

Man verfährt gemäß der Verfahrensweise des Beispieles 56 A zur Herstellung eines erfindungsgemäßen Gemisches von Farbstoffen entsprechend den allgemeinen Formeln (1A) und (1B), setzt jedoch anstelle der zweiten Kupplungskomponente 2-Aminonaphthalin-5,7-disulfonsäure die äquivalente Menge an 2-Aminonaphthalin-3,6-disulfonsäure ein. Man erhält ein Gemisch der beiden in den Beispielen 2 und 34 beschriebenen Disazoverbindungen, das ebenfalls nach den für faserreaktive Farbstoffe üblichen Färbeverfahren beispielsweise auf Baumwolle farbstarke rotstichig blaue Färbungen und Drucke mit guten Echtheitseigenschaften liefert.

Beispiel 56 C

Man verfährt gemäß der Verfahrensweise des Beispieles 56 A zur Herstellung eines erfindungsgemäßen Gemisches von Farbstoffen entsprechend den allgemeinen Formeln (1A) und (1B), setzt jedoch anstelle der zweiten Kupplungskomponente 2-Aminonaphthalin-5,7-disulfonsäure die äquivalente Menge an 2-Aminonaphthalin-6,8-disulfonsäure ein. Man erhält ein Gemisch der beiden in den Beispielen 2 und 35 beschriebenen Disazoverbindungen, das ebenfalls nach den für faserreaktive Farbstoffe üblichen Färbeverfahren beispielsweise auf Baumwolle farbstarke rotstichig blaue Färbungen und Drucke mit guten Echtheitseigenschaften liefert.

Beispiel 56 D

Man verfährt gemäß der Verfahrensweise des Beispieles 56 A zur Herstellung eines erfindungsgemäßen Gemisches von Farbstoffen entsprechend den allgemeinen Formeln (1A) und (1B), setzt jedoch anstelle der zweiten Kupplungskomponente 2-Aminonaphthalin-5,7-disulfonsäure die äquivalente Menge an 2-Aminonaphthalin-5-sulfonsäure ein. Man erhält ein Gemisch der beiden in den Beispielen 2 und 36 beschriebenen Disazoverbindungen, das ebenfalls nach den für faserreaktive Farbstoffe üblichen Färbeverfahren beispielsweise auf Baumwolle farbstarke rotstichig blaue Färbungen und Drucke mit guten Echtheitseigenschaften liefert.

Beispiel 56 E

Man verfährt gemäß der Verfahrensweise des Beispieles 56 A zur Herstellung eines erfindungsgemäßen Gemisches von Farbstoffen entsprechend den allgemeinen Formeln (1A) und (1B), setzt jedoch anstelle der zweiten Kupplungskomponente 2-Aminonaphthalin-5,7-disulfonsäure die äquivalente Menge an 2-Aminonaphthalin-6-sulfonsäure ein. Man erhält ein Gemisch der beiden in den Beispielen 2 und 37 beschriebenen Disazoverbindungen, das ebenfalls nach den für faserreaktive Farbstoffe üblichen Färbeverfahren beispielsweise auf Baumwolle farbstarke rotstichig blaue Färbungen und Drucke mit guten Echtheitseigenschaften liefert.

Beispiel 56 F

Man verfährt gemäß der Verfahrensweise des Beispieles 56 A zur Herstellung eines erfindungsgemäßen Gemisches von Farbstoffen entsprechend den allgemeinen Formeln (1A) und (1 B), setzt jedoch anstelle der zweiten Kupplungskomponente 2-Aminonaphthalin-5,7-disulfonsäure die äquivalente Menge an 2-Aminonaphthalin-7-sulfonsäure ein. Man erhält ein Gemisch der beiden in den Beispielen 2 und 38 beschriebenen Disazoverbindungen, das ebenfalls nach den für faserreaktive Farbstoffe üblichen Färbeverfahren beispielsweise auf Baumwolle farbstarke rotstichig blaue Färbungen und Drucke mit guten Echtheitseigenschaften liefert.

Beispiel 56 G

Man verfährt gemäß der Verfahrensweise des Beispieles 56 A zur Herstellung eines erfindungsgemäßen Gemisches von Farbstoffen entsprechend den allgemeinen Formeln (1A) und (1B), setzt jedoch anstelle der zweiten Kupplungskomponente 2-Aminonaphthalin-5,7-disulfonsäure die äquivalente Menge an 2-Aminonaphthalin-8-sulfonsäure ein. Man erhält ein Gemisch der beiden in den Beispielen 2 und 39 beschriebenen Disazoverbindungen, das ebenfalls nach den für faserreaktive Farbstoffe üblichen Färbeverfahren beispielsweise auf Baumwolle farbstarke rotstichig blaue Färbungen und Drucke mit guten Echtheitseigenschaften liefert.

Beispiel 57 A

Man stellt gemäß den Angaben des Beispieles 1 die Monoazoverbindung durch Kupplungsreaktion des Diazoniumsalzes von 28,1 Teilen 4-(β-Sulfatoethylsulfonyl)-anilin mit 23 Teilen 2-Sulfo-5-acetylamino-anilin her, diazotiert diese Amino-Azoverbindung gemäß den Angaben des Beispieles 1 und fügt sodann 15 Teile 2-Amino-naphthalin-5,7-disulfonsäure und 16,5 Teile 8-Sulfo-6-(β-sulfatoethylsulfonyl)-2-amino-naphthalin hinzu, stellt mittels Natriumcarbonat einen pH-Wert von 4,5 bis 5 ein und führt die Kupplungsreaktion unter weiterem Rühren bei etwa 20 °C zu Ende.

Man isoliert das erfindungsgemäße Gemisch der erfindungsgemäßen Disazoverbindungen der Formeln (in Form der freien Säure geschrieben)

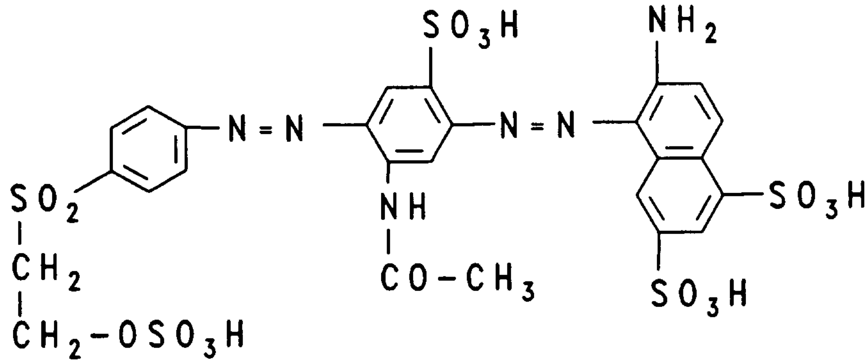

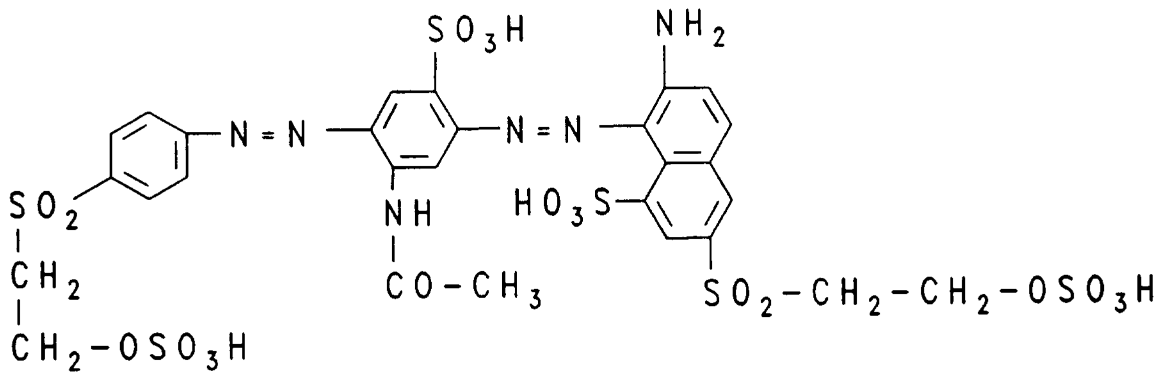

als Alkalimetallsalze (Natriumsalze) durch Ausfällen aus der Syntheselösung mittels Natriumchlorid. Mit dem erfindungsgemäßen Gemisch erhält man nach den für faserreaktive Farbstoffe üblichen Applikations- und Fixierverfahren auf den in der Beschreibung genannten Materialien, wie insbesondere auf Baumwolle, farbstarke blaustichig rote Färbungen und Drucke mit guten Echtheitseigenschaften, von denen insbesondere die gute Lichtechtheit hervorgehoben werden kann.

Beispiel 57B

Man verfährt gemäß der Verfahrensweise des Beispieles 57A zur Herstellung eines erfindungsgemäßen Gemisches von Farbstoffen entsprechend den allgemeinen Formeln (1A) und (1B), setzt jedoch anstelle der zweiten Kupplungskomponente 8-Sulfo-6-(β-sulfatoethylsulfonyl)-2-amino-naphthalin die äquivalente Menge an 8-(β-Sulfatoethylsulfonyl)-2-amino-naphthalin ein. Man erhält ein Gemisch der beiden in den Beispielen 2 und 32 beschriebenen Disazoverbindungen, das ebenfalls nach den für faserreaktive Farbstoffe üblichen Färbeverfahren beispielsweise auf Baumwolle farbstarke blaustichig rote Färbungen und Drucke mit guten Echtheitseigenschaften liefert.

Beispiel 57C

Man verfährt gemäß der Verfahrensweise des Beispieles 57A zur Herstellung eines erfindungsgemäßen Gemisches von Farbstoffen entsprechend den allgemeinen Formeln (1A) und (1B), setzt jedoch anstelle der zweiten Kupplungskomponente 8-Sulfo-6-(β-sulfatoethylsulfonyl)-2-amino-naphthalin die äquivalente Menge an 6-Sulfo-8-(β-sulfatoethylsulfonyl)-2-amino-naphthalin ein. Man erhält ein Gemisch der beiden in den Beispielen 2 und 33 beschriebenen Disazoverbindungen, das ebenfalls nach den für faserreaktive Farbstoffe üblichen Färbeverfahren beispielsweise auf Baumwolle farbstarke blaustichig rote Färbungen und Drucke mit guten Echtheitseigenschaften liefert.

Beispiel 58A

50 Teile der im Beispiel 1 beschriebenen erfindungsgemäßen Disazoverbindung und 50 Teile der im Beispiel 2 beschriebenen erfindungsgemäßen Disazoverbindung werden in einer mechanischen Mischapparatur homogen vermischt. Die erhaltene erfindungsgemäße Mischung färbt nach den für faserreaktive Farbstoffe üblichen Applikations- und Fixierverfahren die in der Beschreibung genannten Materialien, insbesondere Baumwolle, in farbstarken, violetten Tönen mit guten Echtheitseigenschaften, von denen insbesondere die guten Lichtechtheit hervorgehoben werden kann. Die Mischung entspricht im wesentlichen der Zusammensetzung des Beispieles 56A und hat die gleichen Eigenschaften.

Beispiel 58B

In gleicher Weise erhält man Gemische von zwei erfindungsgemäßen Disazoverbindungen, welche den Gemischen der Beispiele 56B, 56C, 56D, 56E, 56F und 56G entsprechen, wenn man 50 Teile der erfindungsgemäßen Disazoverbindung von Beispiel 1 mit 50 Teilen der erfindungsgemäßen Disazoverbindung von Beispiel 34 bzw. 35 bzw. 36 bzw. 37 bzw. 38 bzw. 39 mechanisch vermischt.

Beispiel 59A

50 Teile der im Beispiel 1 beschriebenen erfindungsgemaßen Disazoverbindung und 50 Teile der im Beispiel 3 beschriebenen erfindungsgemäßen Disazoverbindung werden in einem mechanischen Mixer homogen vermischt. Die erhaltene Mischung färbt nach den für faserreaktive Farbstoffe üblichen Applikations- und Fixierverfahren die in der Beschreibung genannten Materialien, insbesondere Baumwolle, in farbstarken, blaustichig roten Tönen mit guten Echtheitseigenschaften, von denen insbesondere die Lichtechtheit hervorgehoben werden kann. Die Mischung entspricht im wesentlichen der Zusammensetzung des Beispieles 56A und hat die gleichen Eigenschaften.

Beispiel 59 B

In gleicher Weise wie im Beispiel 59 A beschrieben, erhält man erfindungsgemäße Gemische, wenn man die beiden in den Beispielen 1 und 32 beschriebenen erfindungsgemäßen Disazoverbindungen miteinander vermischt. Auch mit dieser erfindungsgemäßen Mischung erhält man nach den in der Technik üblichen Anwendungsverfahren beispielsweise auf Baumwolle farbstarke blaustichig rote Färbungen und Drucke mit guten Echtheitseigenschaften.

Beispiel 59 C

In gleicher Weise wie im Beispiel 59 A beschrieben, erhält man erfindungsgemäße Gemische, wenn man die beiden in den Beispielen 1 und 33 beschriebenen erfindungsgemäßen Disazoverbindungen miteinander vermischt. Auch mit dieser erfindungsgemäßen Mischung erhält man nach den in der Technik üblichen Anwendungsverfahren beispielsweise auf Baumwolle farbstarke blaustichig rote Färbungen und Drucke mit guten Echtheitseigenschaften.

## Patentansprüche

**1.** Disazoverbindung der allgemeinen Formel (1)

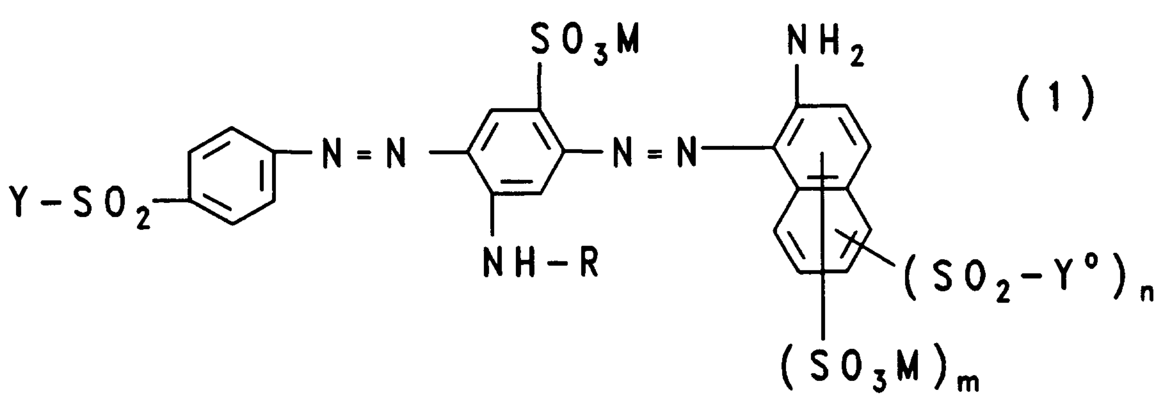

(1)

in welcher bedeuten:

M ist Wasserstoff oder ein Alkalimetall;

Y ist Vinyl oder ist Ethyl, das in β-Stellung durch einen unter Einwirkung von Alkali bei Bildung der Vinylgruppe eliminierbaren Substituenten substituiert ist;

$Y^0$ ist Vinyl oder ist Ethyl, das in β-Stellung durch einen unter Einwirkung von Alkali bei Bildung der Vinylgruppe eliminierbaren Substituenten substituiert ist;

m ist die Zahl 1 oder 2;

n ist die Zahl Null oder 1 (wobei im Falle von n gleich Null diese Gruppe Wasserstoff ist);

R ist eine Gruppe der allgemeinen Formel (2) oder (3)

$-CO-R^A$ (2)

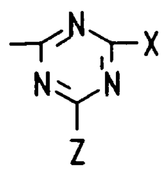

(3)

in welchen

$R^A$ Alkyl von 1 bis 6 C-Atomen bedeutet oder Alkyl von 2 bis 6 C-Atomen ist, das substituiert ist, oder ein Phenylrest ist, der durch 1, 2 oder 3 Substituenten aus der Gruppe Sulfo, Carboxy, Alkyl von 1 bis 4 C-Atomen oder Alkoxy von 1 bis 4 C-Atomen substituiert sein kann,

X Chlor, Fluor, Hydroxy, Alkoxy von 1 bis 10 C-Atomen, Cycloalkyloxy von 5 bis 8 C-Atomen ist oder Alkoxy von 3 bis 8 C-Atomen bedeutet, wobei der Alkylrest durch eine oder zwei Heterogruppen unterbrochen ist, die aus den Gruppen -O-, -NH-, -CO-NH- und -NH-CO- ausgewählt sind, oder Benzyloxy, Sulfomethoxy, β-Sulfoethoxy, Amino, Alkylamino von 1 bis 10 C-Atomen, Cycloalkylamino von 5 bis 8 C-Atomen oder Alkylamino von 3 bis 8 C-Atomen bedeutet, wobei der Alkylrest durch eine oder zwei Heterogruppen unterbrochen ist, die aus den Gruppen -O-, -NH-, -CO-NH- und -NH-CO- ausgewählt sind, oder Benzylamino, Sulfomethylamino, β-Sulfoethylamino oder Cyanoamino ist und

Z Chlor, Fluor oder eine Gruppe der allgemeinen Formel (4a), (4b), (4c) oder (4d)

$-NH-alk-SO_2-Y^1$ (4a)

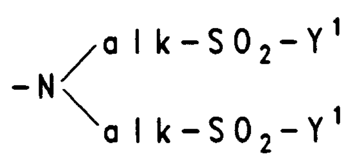

(4b)

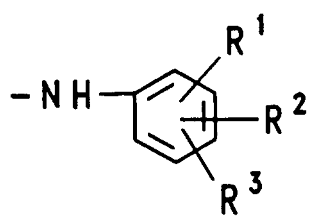

(4c)

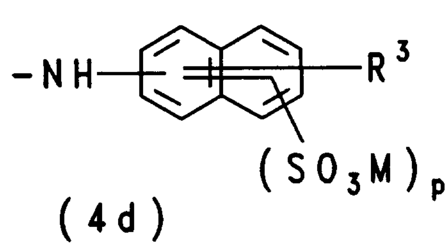

(4d)

ist, in welchen

alk Alkylen von 1 bis 8 C-Atomen oder Alkylen von 3 bis 8 C-Atomen ist, das durch eine oder zwei Heterogruppen unterbrochen ist, die aus den Gruppen -O-, -NH-, -CO-NH- und -NH-CO- ausgewählt sind,

$Y^1$ Vinyl ist oder Ethyl bedeutet, das in β-Stellung durch einen Substituenten substituiert ist, der durch Alkali unter Bildung der Vinylgruppe eliminierbar ist,

- $R^1$ Wasserstoff, Carboxy, Sulfo oder eine Gruppe der allgemeinen Formel $-SO_2-Y^1$ mit $Y^1$ der obengenannten Bedeutung ist,
- $R^2$ Wasserstoff, Alkyl von 1 bis 4 C-Atomen, Alkoxy von 1 bis 4 C-Atomen, Chlor, Brom, Carboxy, Sulfo oder Nitro ist,
- $R^3$ Wasserstoff, Alkyl von 1 bis 4 C-Atomen, Alkoxy von 1 bis 4 C-Atomen, Chlor, Brom, Carboxy oder Sulfo ist,
- M eine der obengenannten Bedeutungen besitzt und
- p für die Zahl 1 oder 2 steht,

wobei im Falle von n gleich 1 der Rest Z in Formel (3) bevorzugt keinen Rest mit einer Gruppe der Formel $-SO_2-Y^1$ bedeutet.

2. Verbindung nach Anspruch 1, dadurch gekennzeichnet, daß $R^A$ Methyl ist.

3. Verbindung nach Anspruch 1 oder 2, dadurch gekennzeichnet, daß X Chlor, Fluor oder Cyanoamino ist.

4. Verbindung nach mindestens einem der Ansprüche 1 bis 3, dadurch gekennzeichnet, daß Y $\beta$-Sulfatoethyl ist.

5. Verbindung nach Anspruch 1 der Formel

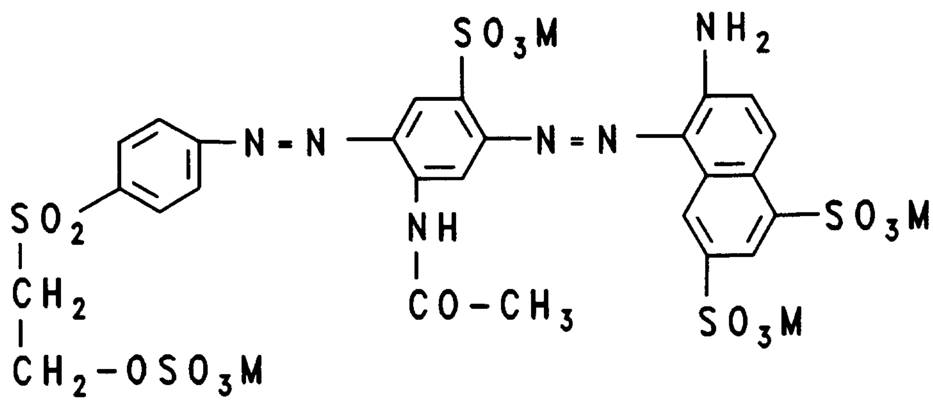

in welcher M die in Anspruch 1 genannte Bedeutung besitzt.

6. Verbindung nach Anspruch 1 der Formel

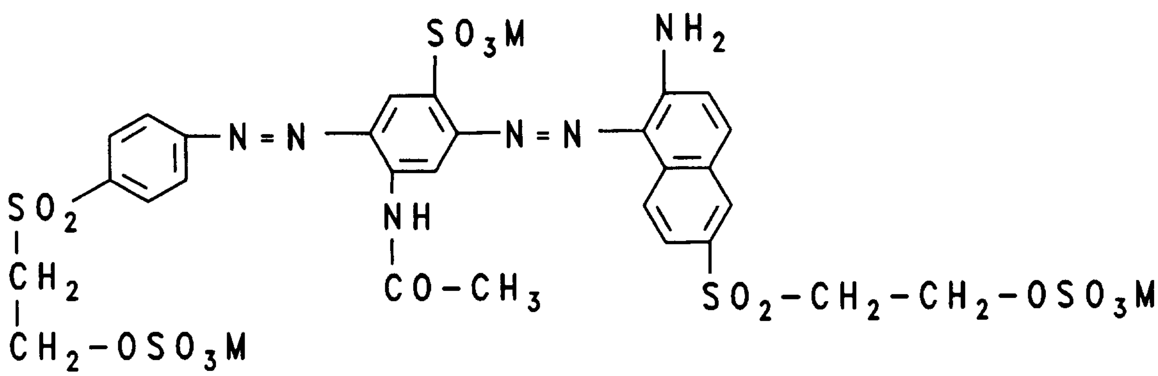

in welcher M die in Anspruch 1 genannte Bedeutung besitzt.

7. Ein Gemisch von Verbindungen der allgemeinen Formel (1), bevorzugt von Verbindungen der allgemeinen Formel (1A) und (1B)

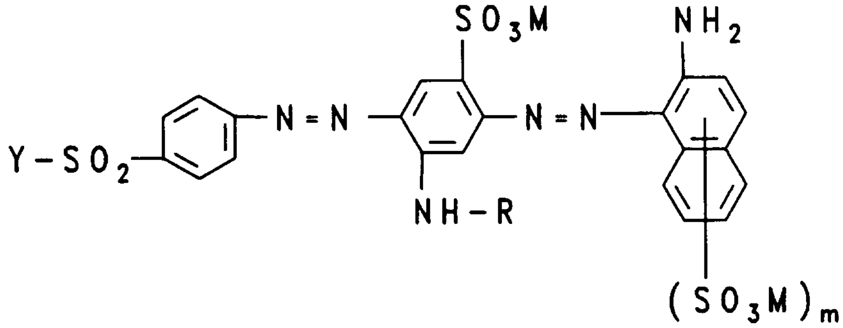

(1A)

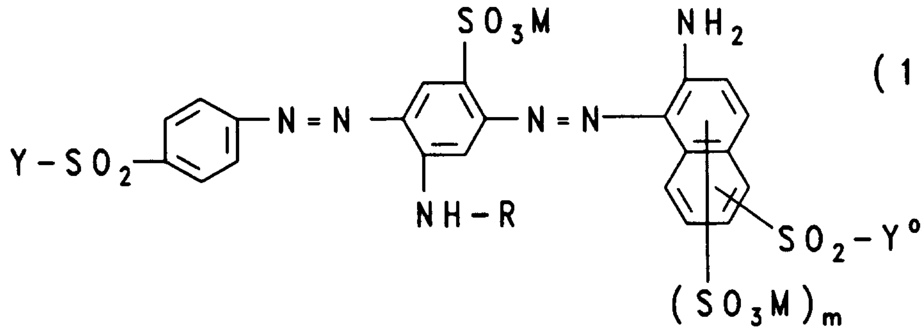

(1B)

in welchen M, m, Y, $Y^0$ und R die in Anspruch 1 genannten Bedeutungen haben.

**8.** Gemisch nach Anspruch 7, enthaltend eine oder mehrere Disazoverbindungen der allgemeinen Formel (1A) und eine oder mehrere Disazoverbindungen der allgemeinen Formel (1B) im Mischungsverhältnis von 5:95 bis 95:5 Gew.-%.

**9.** Gemisch nach Anspruch 7, enthaltend eine oder mehrere Disazoverbindungen der allgemeinen Formel (1A) und eine oder mehrere Disazoverbindungen der allgemeinen Formel (1B) im Mischungsverhältnis von 30:70 bis 70:30 Gew.-%.

**10.** Gemisch nach mindestens einem der Ansprüche 7 bis 9, dadurch gekennzeichnet, daß $R^A$ jeweils Acetyl ist.

**11.** Gemisch nach mindestens einem der Ansprüche 7 bis 10, dadurch gekennzeichnet, daß Y jeweils $\beta$-Sulfatoethyl ist.

**12.** Verfahren zur Herstellung einer erfindungsgemäßen Disazoverbindung der allgemeinen Formel (1) von Anspruch 1, dadurch gekennzeichnet, daß man eine Verbindung der allgemeinen Formel (5)

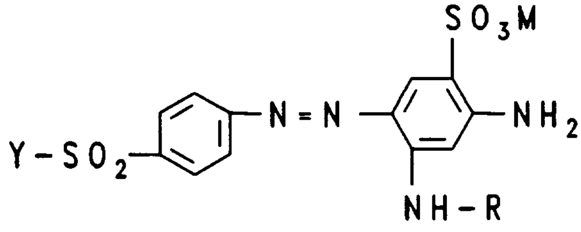

(5)

in welcher Y, R und M die in Anspruch 1 genannten Bedeutungen haben, diazotiert und mit einer Verbindung der allgemeinen Formel (6)

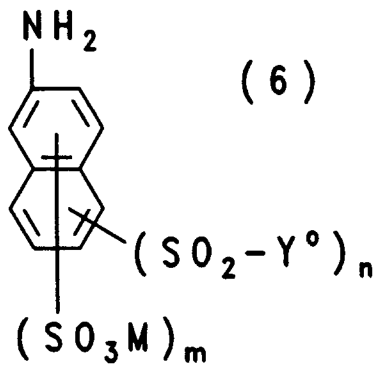

(6)

in welcher $Y^0$, M, m und n die in Anspruch 1 genannten Bedeutungen haben, kuppelt.

**13.** Verwendung einer Verbindung von Anspruch 1 oder eines Gemisches von Anspruch 7 zum Färben (einschließlich Bedrucken) von hydroxy- und/oder carbonamidgruppenhaltigem Material, insbesondere Fasermaterial.

**14.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff ein Verbindung von Anspruch 1 oder ein Gemisch von Anspruch 7 einsetzt.

Europäisches Patentamt

# EUROPÄISCHER RECHERCHENBERICHT

Nummer der Anmeldung

EP 94109616.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | FR - A - 2 655 995 (SANDOZ) * Ansprüche 1,11,12 * -- | 1,12, 13 | C 09 B 62/513<br>D 06 P 1/38 |
| A | DE - A - 3 930 704 (HOECHST) * Ansprüche 1,4-7 * -- | 1,12-14 | |
| D,A | EP - A - 0 292 825 (BAYER) * Ansprüche 1,5 * -- | 1,13 | |
| A | EP - A - 0 122 600 (AMERICAN HOECHST CORPORATION) * Ansprüche 1,5,12,13 * -- | 1,12-14 | |
| A | EP - A - 0 068 204 (SUMITOMO CHEMICAL COMPANY) * Ansprüche 1,7,8 * -- | 1,12, 14 | |
| D,A | US - A - 4 072 463 (LUDWIG SCHLÄFER et al.) * Anspruch 1 * ---- | 1,7 | RECHERCHIERTE SACHGEBIETE (Int. Cl.⁵)<br>C 09 B 62/00<br>D 06 P |

Der vorliegende Recherchenbericht wurde für alle Patentansprüche erstellt.

| Recherchenort | Abschlußdatum der Recherche | Prüfer |
|---|---|---|
| WIEN | 05-08-1994 | REIF |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument